(19) Europäisches Patentamt
European Patent Office
Office européen des brevets

(11) EP 0 563 851 B1

(12) **EUROPÄISCHE PATENTSCHRIFT**

(45) Veröffentlichungstag und Bekanntmachung des Hinweises auf die Patenterteilung:
**30.05.2001 Patentblatt 2001/22**

(51) Int Cl.⁷: **C08J 5/22**

(21) Anmeldenummer: **93105164.3**

(22) Anmeldetag: **29.03.1993**

# (54) Bipolare Membran und Verfahren zu deren Herstellung

Bipolar membrane and process for its preparation

Membrane bipolaire et procédé pour sa fabrication

(84) Benannte Vertragsstaaten:
**AT BE DE ES FR IT NL SE**

(30) Priorität: **03.04.1992 DE 4211267**

(43) Veröffentlichungstag der Anmeldung:
**06.10.1993 Patentblatt 1993/40**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder: **Bauer, Bernd, Dipl.-Chem.
D-71665 Vaihingen-Gündelbach (DE)**

(56) Entgegenhaltungen:
**DE-A- 3 330 004**
**DE-A- 4 026 154**
**FR-A- 2 361 927**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 563 851 B1

## Beschreibung

Die Erfindung betrifft eine bipolare Membran bestehend aus einer anionenselektiven und einer kationenselektiven Schicht sowie ein Verfahren zu deren Herstellung, indem man aus flüssiger Phase eine erste ionenselektive Schicht fertigt und auf diese aus flüssiger Phase eine zweite ionenselektive Schicht mit entgegengesetzter Ladung aufbringt.

Die Erzeugung von Protonen und Hydroxyd-Ionen aus Wasser mit Hilfe bipolarer Membranen ist ein interessantes und ökonomisch attraktives Verfahren mit einer Vielzahl von technischen Anwendungsmöglichkeiten. Eine solche bipolare Membran ist schematisch aus einer Kationen- und aus einer Anionenaustauschermembran aufgebaut und die Wasserspaltung erfolgt in der ladungsneutralen Schicht dazwischen. Werden Protonen und Hydroxyd-Ionen durch die kationenselektive und durch die anionenselektive Schicht der bipolaren Membran transportiert, so ist der tatsächlich ermittelte Spannungsabfall immer größer als der theoretisch berechnete, wobei der gesamte Spannungsabfall von der angelegten Stromdichte, vom Widerstand der beiden Austauschermembranen und vom Widerstand der Lösung dazwischen abhängt. Da der spezifische Widerstand von entionisiertem Wasser sehr hoch ist, sollte der Abstand zwischen den beiden Austauschermembranen so gering wie möglich gehalten werden, um einen möglichst niedrigen Gesamtwiderstand zu erreichen.

In der Praxis werden bipolare Membranen hergestellt, indem man zwei Austauschermembranen mit entgegengesetzter Polarität zusammenfügt und dabei versucht, den Zwischenraum zwischen diesen beiden Membranen, die ladungsneutrale Zwischenschicht, so gering wie möglich zu halten. Das für die Erzeugung der Protonen und der Hydroxyd-Ionen erforderliche Wasser wandert durch osmotische Effekte zwischen die beiden Austauschermembranen.

Bipolare Membranen können z.B. zur Gewinnung von Säuren und Basen aus deren korrespondierenden Salzen mittels Elektrodialyse eingesetzt werden, wobei die hierfür erforderlichen Protonen und Hydroxyd-Ionen aus dem Wasser gebildet werden. Der großtechnische Einsatz von bipolaren Membranen ist aber durch deren mangelhafte Eigenschaften stark beeinträchtigt. Die bekannten bipolaren Membranen zeigen bezüglich der ihr angrenzenden Ionen unbefriedigende Permselektivitäten, die zu niedrigen Stromausbeuten bei der Wasserspaltung führen. Ferner mangelhafte chemische Stabilitäten, besonders bei hohen pH-Werten, und viel zu dicke ladungsneutrale Zwischenschichten, die dazu führen, daß der Membranwiderstand ausschließlich durch den Widerstand dieser Zwischenschicht bestimmt wird. Ganz allgemein wird der Membranwiderstand durch die Ladungsdichte, durch die Membrandicke, durch die Geschwindigkeit der $H_2O$-Diffusion in die Zwischenschicht und durch die Geschwindigkeit der $H_2O$-Dissoziation bestimmt.

Bipolare Membranen sind bislang als solche kommerziell nicht erwerbbar, sie können jedoch durch Laminieren, Pressen oder Kleben von kommerziellen Anionen- und Kationenaustauschermembranen hergestellt werden. Eine auf diese Weise zusammengefügte, zweilagige Membran zeigt aber ein sehr unbefriedigendes Verhalten bezüglich ihrer Handhabbarkeit, ihres elektrischen Widerstandes und ihrer chemischen Stabilität. Eine wichtige Voraussetzung für den erfolgreichen Einsatz von bipolaren Membranen ist deren Beständigkeit bei hohen und niedrigen pH-Werten. Werden bei diesen pH-Werten stabile Kationen- oder Anionenaustauschermembranen für die Herstellung von bipolaren Membranen verwendet, so bedeutet dies nicht zwangsläufig, daß diese Austauschermembranen als Bestandteil der bipolaren Membran bei diesen pH-Werten ebenfalls stabil sind. Besonders kritisch ist hierbei die Alkalistabilität der Anionenaustauschermembranen. Siehe Desalination 68, 279-292 (1988). Aus den Datenblättern für kommerzielle Austauschermembranen ist nicht zu entnehmen, wie sich deren Verhalten bezüglich niedrigen oder hohen pH-Werten beim Einbau in bipolare Membranen ändert.

Eine weitere, wichtige Voraussetzung für den erfolgreichen Einsatz von bipolaren Membranen ist deren Quellverhalten, wobei das Quellverhalten von Anionen- und Kationenaustauschermembranen für den Einbau in bipolare Membranen aufeinander abgestimmt sein muß, um zu verhindern, daß die resultierende bipolare Membran reißt und unbrauchbar wird. Aus den Datenblättern für die kommerziellen Austauschermembranen ist zwar in den meisten Fällen ein Hinweis auf deren Quellverhalten in vollentsalztem Wasser enthalten, ein ganz bestimmtes Quellverhaltens wird über eine Änderung der Kapazität der Austauschermembran erzielt. Für den erfolgreichen Einsatz von bipolaren Membranen ist aber erforderlich, daß die Kapazitäten von Anionen- und Kationenaustauschermembran gleich sind. Zur Zeit ist es nicht möglich, aus dem Spektrum der kommerziellen Austauschermembranen solche mit gleichem Quellverhalten bei gleicher Kapazität zu finden.

Eine weitere, wichtige Voraussetzung für den erfolgreichen Einsatz von bipolaren Membranen ist deren Permselektivität. Zwar ändert sich die Permselektivität von Austauschermembranen nicht, wenn diese zu bipolaren Membranen verarbeitet werden, die Permselektivität von kommerziellen Austauschermembranen ist aber nicht ausreichend zur Herstellung von bipolaren Membranen. Je geringer deren Permselektivität ist, desto geringer ist auch deren Stromausbeute bei der Wasserspaltung. In der Praxis gibt es zwei Maßnahmen, um die Perm- selektivität von Austauschermembranen zu erhöhen; a) durch eine Erhöhung der Ladungsdichte der Membran und b) durch eine Erhöhung der Vernetzungsdichte der Membran, wobei die beiden Maßnahmen a) und b) gleichzeitig durchgeführt werden müssen.

Wird nur die Ladungsdichte einer Austauschermembran erhöht, ohne gleichzeitig auch deren Vernetzungsdichte zu erhöhen, würde die resultierende Membran quellen und die Permselektivität würde erniedrigt werden, da im gequollenen Zustand die Coionen-Konzentration erhöht ist.

Nach dem Stand der Technik ist es nicht möglich, eine Kombination von Anionen- und Kationenaustauschermembranen zu finden, die alle Anforderungen an die chemische Stabilität, Permselektivität und Austauscherkapazität einer bipolaren Membran erfüllt. Eine Kombination von hoher Ladungsdichte, d.h. hoher Austauscherkapazität mit hoher Permselektivität ist nicht möglich. Nach dem Stand der Technik wird eine Erhöhung der Permselektivtät durch eine Erniedrigung der Austauscherkapazität bewirkt, wobei die Austauscherkapazität umgekehrt proportional dem Membranwiderstand ist. Die Zahl der durch bipolare Membranen erzeugten Protonen und Hydroxid-Ionen ist proportional der Stromdichte und je höher die Permselektivität ist, desto größer ist die Stromausbeute. Für die Erzeugung salzfreier Produkte sind also bipolare Membranen mit hoher Permselektivität erforderlich und für den wirtschaftlichen Einsatz solcher Verfahren ist es notwendig, hohe Permselektivitäten mit hohen Austauscherkapazitäten kombinieren zu können.

Aus der DE 27 37 131 C2 sind bipolare Membranen mit einer anionenselektiven und einer kationenselektiven Schicht bekannt, bei denen mindestens eine der ionenselektiven Schichten aus in einem Matrix-Polymer eingelagerten, feinteiligen Ionenaustauscherharz besteht. Es handelt sich hier also um heterogene Austauschermembranen. Beim Betrieb der bipolaren Membran beginnen die Austauscherharz-Körnchen zu quellen und zeigen ein anderes Quellverhalten als die Polymer-Matrix. Dies führt dazu, daß sich an den Grenzschichten Matrix/Austauscherharz-Körnchen Riße bilden, daß die bipolare Membran Risse bekommt und damit eine geringe Permselektivität zeigt. Ferner enthält die Polymer-Matrix Polyvinylidenfluorid, welches eine geringe Alkalistabilität besitzt. In einer weiteren Ausführungsform wird die Oberfläche der einen ionenselektiven Membran durch Schmiergeln aufgerauht, bevor die zweite ionenselektive Schicht aufgetragen wird. Das Schmiergeln ist ein undefinierter Vorgang und führt zu nicht-reproduzierbaren Ergebnissen.

Aus der DE 3330004 A1 sind bipolare Membranen bekannt, die dadurch erhältlich sind, daß man auf einer Kationenaustauschermembran aus flüssiger Phase eine neutrale Vorstufe einer Anionenaustauschermembran fällt und diese Vorstufe selektiv mit anionischen Resten versieht. Dabei wird eine Durchdringung der beiden Polymere durch die Wahl geeigneter Lösungsmittel und durch das Ausschalten von Coulomb'schen Kräften vermieden. Aber auch diese Membranen erfüllen nicht alle Anforderungen bzgl. Permselektivität, Austauscherkapazität, Membranwiderstand, Stromdichte und Stromausbeute.

Aus der DE 40 26 154 A1 sind bipolare Mehrschichtmembranen bekannt, bei denen sich zwischen der anionen- und der kationenselektiven Schicht eine Polyelektrolyt-Komplex-Schicht mit überschüssigen basischen oder mit überschüssigen sauren Gruppen befindet. Die Dicke dieser Polyelektrolyt-Komplex-Schicht beträgt zwar nur 0.5 bis 500 nm, trotzdem wird aber eine weitere Verringerung der ladungsneutralen Zwischenschicht und damit des elektrischen Widerstands einer bipolaren Membran angestrebt.

Aufgabe der Erfindung ist es, bipolare Membrane zur Verfügung zu stellen, die dadurch erhältlich sind, daß man aus flüssiger Phase eine erste ionenselektive Schicht fertigt und auf diese aus flüssiger Phase eine zweite ionenselektive Schicht mit entgegengesetzter Ladung aufbringt, wobei man aus einer Polymerlösung L1 eine ionenselektive Schicht erzeugt, indem man die Lösung L1 zu einem Film ausstreicht, daß man während des Ausstreichens den resultierenden Polymerfilm einem wasserdampfhaltigen oder mit Wasserdampf gesättigten, inerten Gas oder Gasgemisch mit einer relativen Luftfeuchtigkeit von 95-100% aussetzt, daß man das Lösungsmittel entfernt, und daß man auf der Seite der resultierenden, ionenselektiven Schicht, die dem wasserdampfhaltigen Gas oder Gasgemisch ausgesetzt war, aus einer Polymerlösung L2 eine zweite ionenselektive Schicht mit entgegengesetzter Ladung erzeugt. Bevorzugte Ausführungsformen sind in den Unteransprüchen weiter erläutert.

Aufgabe der vorliegenden Erfindung ist es, ein Verfahren bereitzustellen, mit dem bipolare Membranen aus einer anionen- und einer kationenselektiven Schicht hergestellt werden können, wobei die Dicke der ladungsneutralen Zwischenschicht zwischen der anionen- und der kationenselektiven Schicht gegenüber dem Stand der Technik verringert werden soll, um damit den Membranwiderstand zu vermindern, ohne daß dadurch andere physikalische oder die chemischen Eigenschaften oder die Permselektivität der Membran negativ beeinflußt werden. In weiteren Ausführungsformen soll ferner ein Verfahren bereitgestellt werden, mit dem zusätzlich zur Verringerung der ladungsneutralen Zwischenschicht die kationenselektive Schicht der resultierenden bipolaren Membranen bei 50 °C beständig in 6 N Säuren wird und/oder die anionenselektive Schicht bei 50 °C beständig in 6 N Laugen wird. Außerdem sollen in weiteren Ausführungsformen Verfahren bereitgestellt werden, mit denen zusätzlich zur Verringerung der ladungsneutralen Zwischenschicht die Ladungsdichten der ionenselektiven Schichten und damit deren Austauscherkapazitäten gezielt variiert und aufeinander abgestimmt werden können. Ferner sollen in weiteren Ausführungsformen Verfahren bereitgestellt werden, mit denen zusätzlich zur Verringerung der ladungsneutralen Zwischenschicht die Vernetzungdichte der ionenselektiven Schichten und damit deren Quellverhalten gezielt variiert und aufeinander abgestimmt werden können.

Gelöst wird die Aufgabe der Verringerung der ladungsneutralen Zwischenschicht dadurch, daß man aus einer Polymerlösung L1 eine ionenselektive Schicht erzeugt, indem man die Polymerlösung L1 zu einem mehr oder weniger

dicken Film ausstreicht, daß man während des Ausstreichens den resultierenden Polymerfilm einem wasserdampfhaltigen oder mit Wasserdampf gesättigten inerten Gas oder Gasgemisch mit einer relativen Luftfeuchtigkeit von 95-100% aussetzt, daß man das Lösungsmittel entfernt, und daß man auf der Seite der resultierenden, ionenselektiven Schicht, die dem wasserdampfhaltigen Gas(gemisch) ausgesetzt war, aus einer Polymerlösung L2 eine zweite ionenselektive Schicht mit entgegengesetzter Ladung erzeugt.

Überraschenderweise wurde festgestellt, daß durch die Behandlung des Polymerfilms mit Wasserdampf die funktionellen Gruppen an der Oberfläche des Polymerfilms "eingefroren" werden, während unter der Oberfläche des Polymerfilms die gelartige Polymerlösung erhalten bleibt. Durch die Behandlung mit einem wasserdampfhaltigen Gas (gemisch) wird auf dem Polymerfilm eine Primärhaut gebildet. Die polaren Gruppen an der Oberfläche des Polymerfilms können sich durch die Wasserdampfbehandlung nicht mehr so orientieren, daß sie in das Membraninnere zeigen, sondern sie bleiben an der Oberfläche statistisch verteilt. Dadurch wird die Oberfläche der ersten ionenselektiven Schicht hydrophil und nicht wie sonst üblich an der Phasengrenze zu Luft hydrophob. Nach der Wasserdampfbehandlung wird nach üblichen Verfahren das Lösungsmittel der Polymerlösung entfernt, d.h. der resultierende Polymerfilm wird nach üblichen Methoden zu einer Membran verarbeitet. Die Entfernung des Lösungsmittels kann z.B. durch Trocknen oder durch Phaseninversion erfolgen.

Dann wird auf die hydrophile Oberfläche der ersten ionenselektiven Schicht aus einer Polymerlösung L2 die zweite ionenselektive Schicht mit entgegengesetzter Ladung nach üblichen Methoden aufgebracht. Durch die hydrophile Oberfläche der ersten ionenselektiven Schicht orientieren sich die polaren Gruppen der zweiten ionenselektiven Schicht derart, daß hydrophil zu hydrophil kommt.

Überraschenderweise wurde festgestellt, daß durch die erfindungsgemäße Behandlung mit Wasserdampf die ladungsneutrale Zwischenschicht der resultierenden bipolaren Membran so drastisch vermindert wird, daß dadurch der elektrische Widerstand der erfindungsgemäßen bipolaren Membran deutlich verringert wird. Nach dem erfindungsgemäßen Verfahren ist die zusätzliche Herstellung einer katalytischen Zwischenschicht, wie sie in der DE 40 26 154 A1 beschrieben ist, nicht mehr erforderlich. Durch den Verfahrensschritt der Primärhautbildung werden sowohl die Konzentration der Festionen an der Membranoberfläche, die Oberflächenladungsdichte, erhöht, als auch der. Abstand, an dem der Potentialsprung auftritt, erniedrigt. Beide Maßnahmen erhöhen den katalytischen Ionenstrom aus der Membran, was einer Erniedrigung des aktiven Widerstandes der Membran gleichkommt.

Als inerte Gase kommen z.B. Stickstoff, Argon oder ganz einfach Luft in Frage. Die Verwendung von wasserdampfhaltiger oder mit Wasserdampf gesättigter Luft bietet den weiteren Vorteil, daß diese einfach und kostengünstig zu erhalten ist.

Die Herstellung der ersten ionenselektiven Schicht kann z.B. derart durch geführt werden, daß man die Polymerlösung L1 in einem Klimaschrank mit eingestellter (Luft)Feuchtigkeit zu einem Film ausrakelt. Die relative (Luft) Feuchtigkeit im Klimaschrank wird dabei so eingestellt, daß das Gas(gemisch) nicht mit Wasserdampf übersättigt ist, denn eine Kondensation des Wasserdampfes muß vermieden werden und es dürfen sich keine Wassertropfen bilden. Bevorzugt ist es, wenn die relative (Luft)Feuchtigkeit so hoch wie möglich ist, also so weit wie möglich an 100 % herankommt. Sehr gute Resultate werden z.B. mit einer relativen Luftfeuchtigkeit von 95 % erzielt.

Die Untergrenze der relativen (Luft)Feuchtigkeit ergibt sich aus dem Phasendiagramm für das ternäre System Polymer/Lösungsmittel/Fällungsmittel, wobei mit Fällungsmittel hier Wasser gemeint ist, und wobei eine mindestens so hohe relative (Luft)Feuchtigkeit eingesetzt wird, daß die Mischungslücke dieses ternären Systems an der Oberfläche erreicht wird. Figur 1 zeigt ein derartiges Phasendiagramm. Solche Phasendiagramme für ternäre Systeme sind aus Tabellenwerken der Thermodynamik bekannt, sodaß dem Fachmann der für den jeweiligen Anwendungsfall erforderliche Wassergehalt des Gases bzw. Gasgemisches leicht zugänglich ist. Sollten jedoch derartige Phasendiagramme einmal nicht zur Verfügung stehen, so wird man in jedem Fall mit einer relativen Luftfeuchtigkeit von ca. 95 % gute Resultate erzielen.

Ferner ist es zweckmäßig, die Temperatur des wasserdampfhaltigen Gases bzw. Gasgemisches nicht über derjenigen der Polymerlösung zu halten, damit an der Polymeroberfläche kein Wasser kondensiert. Sollte das Polymermaterial jedoch kälter als das wasserdampfhaltige Gas(gemisch) sein, so darf das wasserdampfhaltige Gas(gemisch) nicht mit Wasserdampf gesättigt sein.

Die für den jeweiligen Anwendungsfall geeignete Temperatur des wasserdampfhaltigen Gases bzw. Gasgemisches und der Polymerlösung hängt von der Kombination Polymer/Lösungsmittel und der Viskosität der Polymerlösung ab. Wenn die Temperatur zu niedrig gehalten wird, besteht die Gefahr, daß die Polymerlösung geliert, daß deren Viskosität zu hoch wird, und daß z.B. ein Rakeln der Polymerlösung nicht mehr möglich ist. Wenn die Temperatur zu hoch gehalten wird, besteht die Gefahr, daß das Lösungsmittel der Polymerlösung zu schnell verdampft. Durch eine zumutbare Zahl von Versuchen ist es aber dem Fachmann möglich, die für den jeweiligen Anwendungsfall geeigneten Temperaturen zu ermitteln.

Für die Ausrichtung der polaren Gruppen an der Oberfläche des Polymerfilms ist nicht der absolute Wassergehalt des Gases bzw. Gasgemisches entscheidend, sondern die Aktivität des Wasserdampfes, sodaß die relative (Luft)Feuchtigkeit unabhängig von der Temperatur ist, wenn sich die Mischungslücke in dem Temperaturintervall nicht

verschiebt.

Mit dem erfindungsgemäßen Verfahren ist es möglich, entweder zuerst die anionenselektive Schicht und darauf die kationenselektive Schicht zu fertigen, oder zuerst die kationenselektive Schicht und darauf die anionenselektive Schicht. Geeignete Polymere zur Herstellung der ionenselektiven Schichten der erfindungsgemäßen bipolaren Membran sind all die Polymere, aus denen nach dem Stand der Technik ionenselektive Schichten bzw. Ionenaustauschermembranen gefertigt werden können.

In einer weiteren Ausführungsform des erfindungsgemäßen Verfahrens wird nach der Behandlung des Polymerfilms mit einem wasserdampfhaltigen Gas(gemisch) und vor dem Entfernen des Lösungsmittels der Polymerfilm 5 bis 300 Sekunden lang, bevorzugt 30 Sekunden lang, einem Wasserdampf von 100 °C ausgesetzt. Diese Maßnahme bewirkt, daß die Polymersegmente an der Oberfläche statistisch orientiert eingefroren werden, und daß bei der Herstellung der anionenselektiven Schicht eine unvollständige Quaternisierung an der Oberfläche erfolgt.

In einer weiteren Ausführungsform des erfindungsgemäßen Verfahrens wird der Polymerfilm, gegebenenfalls nach dem Behandeln mit 100 °C- heißem Wasserdampf, 3 bis 60 Minuten lang, bevorzugt 10 Minuten lang, bei Temperaturen zwischen 25 und 85 °C und bei einer relativen (Luft)Feuchtigkeit von 60 bis 95 % gehalten. Diese Maßnahme bewirkt, daß eine vollständige Überführung des flüssigen Polymerfilms in die feste Phase erfolgt. Bei diesem, als Phaseninversion bekannten Prozeß erfolgt eine statistische Fixierung der Polymerketten und parallel ein Entfernen des Lösungsmittels aus dem Film.

In bevorzugten Ausführungsformen des erfindungsgemäßen Verfahrens verwendet man zur Herstellung der anionenselektiven Schicht jeweils eine homogene Lösung eines polymeren Alkylierungsmittels und eines monomeren Amins, oder eines polymeren Amins und eines monomeren Alkylierungsmittels, oder eines polymeren Alkylierungsmittels und eines polymeren Amins.

Bei der Herstellung dieser Polymerlösungen ist darauf zu achten, daß bei der Zugabe des monomeren Alkylierungsmittels (bzw. des monomeren Amins) zum polymeren Amin (bzw. zum polymeren Alkylierungsmittel) keine lokale Überkonzentration des Monomeren erfolgt, um zu gewährleisten, daß eine gleichmäßige Quaternisierung erfolgt.

Bevorzugte Ausführungsformen des erfindungsgemäßen Verfahrens verwenden zur Herstellung der anionenselektiven Schichten polymere Alkylierungsmittel, welche $-CH_2Cl$ und/oder $-CH_2Br$ Gruppen tragen, wobei auch Mischungen verschiedener, $-CH_2Cl$ und/oder $-CH_2Br$ Gruppen tragender Polymere eingesetzt werden können oder aber auch Mischungen von diesen mit Polymeren, welche keine $-CH_2Cl$ oder $-CH_2Br$ Gruppen tragen. So kann die Dichte der quartären Ammonium-Gruppen, d.h. die Ladungsdichte und damit die Austauscherkapazität der anionenselektiven Schichten gezielt gesteuert und entsprechend dem jeweiligen Anwendungsfall angepaßt werden. $-CH_2Cl$ Gruppen können z.B. durch Chlormethylierung in die entsprechenden Polymere eingebaut werden, $-CH_2Br$ Gruppen durch Bromierung. Bevorzugte Polymere hierfür sind z.B. Polysulfone, Polyethersulfone, Po- ly(p-phenylensulfone), Polystyrole, Polyphenylenoxide, Poly(2.6-dimethylphenylether), Polyphenylensulfide, Polyetherketone (PEK), Polyetheretherketone (PEEK) oder Polyetheretherketonketone (PEEKK). Diese können in der chlormethylierten bzw. bromierten Form oder nicht-chlormethyliert in Mischungen mit chlormethylierten bzw. bromierten Polymeren eingesetzt werden. Als bromiertes Polymer wird bromiertes Polyphenylenoxid bevorzugt. Die Molekulargewichte dieser Polymere werden so gewählt, daß ausreichende Löslichkeit und gute Filmbildungseigenschaften erzielt werden können. Die Molekulargewichte können z.B. zwischen 50 000 und 1 000 000 liegen, kleinere oder größere Werte sind aber möglich.

Die Erzeugung der quartären Ammonium-Gruppen erfolgt durch Umsetzung der polymeren Alkylierungsmittel mit monomeren oder mit polymeren Aminen. Als polymere Amine können Mischungen aus einem oder mehreren Polyaminen und/oder aminierten Polymeren verwendet werden oder Mischungen dieser Polymere mit Polymeren, die keine Amino-Funktionen tragen. Bevorzugte Ausführungsformen des erfindungsgemäßen Verfahrens verwenden als Polyamin Poly-(4-vinylpyridin), Poly-(2-vinylpyridin), Poly-(vinylimidazol), Poly-(4-amino-styrol), Poly-(4-methylamino-styrol), Poly-(4-dimethylamino-styrol), Poly-(vinylcarbazol) oder Polyvinylamin und als aminiertes Polymer ein aminiertes Polysulfon, Polyethersulfon, Poly-(p-phenylensulfon), Polystyrol, Polyphenylenoxid, Poly(2.6-dimethylphenylether), Polyphenylensulfid, Polyetherketon (PEK), Polyetheretherketon (PEEK) oder Polyetheretherketonketon (PEEKK). Durch die Umsetzung von polymeren Alkylierungsmitteln mit polymeren Aminen zur Herstellung der anionenselektiven Schicht wird neben der Erzeugung der quartären Ammonium-Gruppen gleichzeitig auch eine Vernetzung der anionenselektiven Schicht bewirkt und damit kann deren Quellbarkeit gezielt gesteuert und dem jeweiligen Anwendungsfall angepaßt werden. Die Molekulargewichte dieser Polymere werden so gewählt, daß ausreichende Löslichkeit und gute Filmbildungseigenschaften erzielt werden. Die Molekulargewichte können z.B. zwischen 50 000 und 1 000 000 liegen, kleinere oder größere Werte sind aber möglich.

Die Herstellung der anionenselektiven Schichten kann auch durch Umsetzung von polymeren Aminen mit monomeren Alkylierungsmitteln erfolgen. Als polymere Amine können Mischungen aus einem oder mehreren Polyaminen und/oder aminierten Polymeren verwendet werden oder Mischungen dieser Polymere mit Polymeren, die keine Amino-Funktionen tragen. Bevorzugte Ausführungsformen des erfindungsgemäßen Verfahrens verwenden als Polyamin Poly-(4-vinylpyridin), Poly-(2-vinylpyridin), Poly-(vinylimidazol), Poly-(4-amino-styrol), Poly-(4-methylamino-styrol), Poly-(4-dimethylamino-styrol), Poly-(vinylcarbazol) oder Polyvinylamin und als aminiertes Polymer ein aminiertes

Polysulfon, Polyethersulfon, Poly-(p-phenylensulfon), Polystyrol, Polyphenylenoxid, Poly(2.6-dimethylphenylether), Polyphenylensulfid, Polyetherketon (PEK), Polyetheretherketon (PEEK) oder Polyetheretherketonketon (PEEKK). Die Molekulargewichte können z.B. zwischen 50 000 und 1 000 000 liegen, kleinere oder größere Werte sind aber möglich.

Die Aufgabe des Bereitstellens von bipolaren Membranen mit einer verbesserten Alkalistabilität der anionenselektiven Schicht wird dadurch erreicht, daß man zu deren Herstellung monomere oder polymere Amine bzw. momomere oder polymere A1kylierungsmittel einsetzt, die zusammen alkalistabile, quartäre Ammonium-Gruppen bilden können. Mit den oben beschriebenen polymeren Alkylierungsmitteln beim Einsatz der monomeren Amine DABCO (1.4-Diazabicyclo-[2.2.2]octan) oder 1.3-Bis(dimethylamino-2.2-dimethylpropan) oder anderer Diamine (I), welche alkalistabile, quartäre Ammonium-Ionen zu bilden vermögen und bei welchen die Monoquaternisierung gegenüber der Bisquaternisierung durch eine unterschiedliche Nucleophilie von mindestens $\Delta pK_a > 1.0$ begünstigt wird, werden nicht nur alkalistabile, anionenselektive Schichten erzeugt, die diese Alkalistabilität auch beim Einbau in bipolare Mehrschichtmembranen beibehalten, sondern es wird auch eine gezielte Vernetzung der anionenselektiven Schicht durchgeführt, wenn man das DABCO, das 1.3-Bis(dimethylamino-2.2-dimethylpropan) oder das Diamin (I) im Unterschuß einsetzt, bezogen auf das polymere Alkylierungsmittel, sodaß neben einer vollständigen Monoquaternisierung der Diamine auch noch teilweise Bisquaternisierung erfolgt. Dadurch wird die anionenselektive Schicht mit

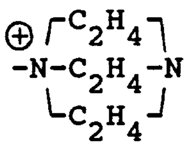 , oder $\overset{\oplus}{-N}(CH_3)_2-CH_2-C(CH_3)_2-CH_2-N(CH_3)_2$

oder anderen quartären Ammonium-Gruppen versehen, die aus dem Diamin (I) gebildet werden und deren Zahl die Austauscherkapazität der anionenselektiven Schicht bestimmt, und es werden die Polymerketten der anionenselektiven Schicht über

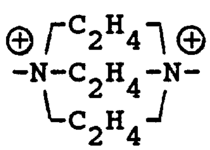 und/oder über 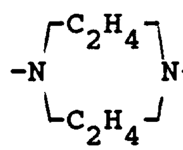-Brücken,

bzw über

$$\overset{\oplus}{-N}(CH_3)_2-CH_2-C(CH_3)_2-CH_2-\overset{\oplus}{N}(CH_3)_2-$$

und/oder über $-NH-CH_2-C(CH_3)_2-CH_2-NH-$Brücken oder über andere aus dem Diamin (I) gebildete Diammonium- bzw. Diamin-Brücken verknüpft.

Bei der Umsetzung der oben beschriebenen Diamine bilden sich in einem ersten Schritt entsprechend dem jeweiligen Unterschuß des Diamins durch Bisquaternisierung zwischen den Polymerketten Diammonium-Brücken aus, die nicht alkalistabil sind, die sich aber in Gegenwart von Alkalien unter Abspaltung von Stickstoff-Substituenten in alkalistabile Diamin-Brücken umwandeln. Nähere Einzelheiten dazu sind der DE 40 26 154 A1 zu entnehmen. Die Zahl der quartären Ammonium-Gruppen bestimmt dabei die Ladungsdichte, d.h. die Austauscherkapazität der anionenselektiven Schicht, und die Zahl der Diamin-Brücken bestimmt deren Vernetzungsdichte und damit deren Quellverhalten. Durch den Grad der Chlormethylierung, bzw. durch die Mischung unterschiedlich chlormethylierter Polymere oder durch Mischungen von chlormethylierten und nicht-chlormethylierten Polymeren kann somit gezielt gesteuert werden, wieviele $-CHCl_2$ Gruppen in das Polymer eingeführt werden und wie groß damit die Summe aus der Zahl der quartären Ammonium-Gruppen (= Ladungsdichte) und der Diamin-Brücken (= Vernetzungsdichte) ist und durch die Menge des zugegebenen Diamin kann das Verhältnis von Ladungsdichte zu Vernetzungsdichte gezielt bestimmt werden.

Mit dem erfindungsgemäßen Verfahren ist es also möglich geworden, bipolare Membranen herzustellen, bei denen neben einem drastisch verringerten, elektrischen Widerstand die Ladungsdichte und die Vernetzungsdichte der anionenselektiven Schichten unabhängig voneinander gezielt steuerbar und den Erfordernissen des jeweiligen Anwendungsfalles gezielt anpassbar ist. Somit kann also die Austauscherkapazität und das Quellverhalten der anionenselektiven Schicht gezielt diesen Eigenschaften der kationenselektiven Schicht angepaßt werden.

Ist die erste ionenselektive Schicht anionenselektiv und wird zu deren Herstellung DABCO verwendet, so ergibt sich ein weiterer entscheidender Vorteil durch das erfindungsgemäße Verfahren. Innerhalb der phaseninvertierten Oberfläche bleibt dem Diamin keine Zeit zur vollständigen Quaternisierung. Damit baut sich ein Gradient basischer, tertiärer N-Atome an der Oberfläche zu stark basischen quartären N-Atomen an der inneren Oberfläche auf. Diese schwächer basische Schicht ist in der Lage, die Poly(4-vinylpyridin)-Schicht der bipolaren Mehrschichtmembran gemäß der DE 40 26 154 A1 zu ersetzen. Die reversible Protonierung kann nun an der äußeren Oberfläche der anionenselektiven Schicht erfolgen.

Werden zur Herstellung der anionenselektiven Schicht polymere Amine und als Alkylierungsmittel 1.3-Dibrom-2.2-dimethylpropan oder eine andere $\alpha,\omega$-Dihalogen-Komponenete (II) eingesetzt, welche mit den Amino-Gruppen des polymeren Amins alkalistabile, quartäre Ammonium-Gruppen zu bilden vermag, so ist durch diese Maßnahme wieder eine Vernetzung der anionenselektiven Schicht möglich geworden. Wird das 1.3-Dibrom-2.2-dimethylpropan oder die andere $\alpha,\omega$- Dihalogen-Komponente (II) im Unterschuß eingesetzt, bezogen auf das polymere Amin, so werden die Polymerketten der anionenselektiven Schicht über Diamin-Brücken verknüpft, welche aus den Amino-Gruppen des polymeren Amins und dem bifunktionellen Alkylierungsmittel (II) gebildet werden. Dabei wird durch die Zahl der Amino-Funktionen des Polymer bestimmt, wie groß die Summe aus der Zahl der quartären Ammonium-Gruppen (= Ladungsdichte) und der Diamin-Brücken (= Vernetzungsdichte) ist und durch die Menge des zugegebenen Aklylierungsmittels kann das Verhältnis von Ladungsdichte zu Vernetzungsdichte gezielt bestimmt werden. Damit kann die Austauscherkapazität und das Quellverhalten der anionenselektiven Schicht gezielt gesteuert werden und diese können den Erfordernissen des jeweiligen Anwendungsfalles gezielt angepaßt werden.

Bevorzugte Ausführungsformen verwenden als polymere Amine die oben beschriebenen Polyamine und aminierte Polymere, wobei auch Mischungen von Polyaminen und/oder aminierten Polymeren möglich sind, sowie Mischungen von diesen mit nichtaminierten Polymeren. Die Zahl der Amino-Funktionen des resultierenden polymeren Amins wird dabei durch den Aminierungsgrad und/oder durch das Mischungsverhältnis verschiedener polymerer Amine mit Polymeren ohne Amino-Funktionen bestimmt.

In weiteren bevorzugten Ausführungsformen des erfindungsgemäßen Verfahrens verwendet man zur Herstellung der kationenselektiven Schicht als Polymere Polysulfone, Polyethersulfone, Poly(p-phenylensulfone), Polystyrole, Polyphenylenoxide, Poly(2.6-dimethylphenylether), Polyphenylensulfide, Polyetherketone (PEK), Polyetheretherketone (PEEK) oder Polyetheretherketonketone (PEEKK), wobei diese Polymere in der nicht-sulfonierten und/oder in der sulfonierten Form eingesetzt werden. So kann z.B. der Sulfonierungsgrad bei der Synthese zwischen 0.3 und 2 mmol -$SO_3H$ pro g Polymer variiert werden; durch Mischen eines sulfonierten Polymers mit einem unsulfonierten Polymer können aber auch geringere Sulfonierungsgrade erreicht werden. Zur Herstellung der kationenselektiven Schichten können sulfonierte Polymere eingesetzt werden, welche eine oder mehrere Arten von -$SO_3X$ Gruppen tragen, mit X = H, $NH_2$ oder $M^{y+}$, wobei M ein Element der 1. bis 4. Haupt- oder Nebengruppe ist, bevorzugt Na oder K , und wobei innerhalb einer kationenselektiven Schicht verschiedene Reste X vorhanden sein können. Ohne Einschränkung der Allgemeinheit sind weitere Beispiele für M Fe, Ni, Zr, Ru oder Cr. Die Molekulargewichte der sulfonierten oder nicht-sulfonierten Polymere können z.B. zwischen 50 000 und 1 000 000 liegen, kleinere oder größere Werte sind aber möglich.

In weiteren Ausführungsformen des erfindungsgemäßen Verfahrens setzt man Polymere ein, welche -$SO_3H$ Gruppen tragen, und vernetzt die kationenselektive Schicht definiert, indem man den Lösungen L1 bzw. L2 entsprechend dem gewünschten Vernetzungsgrad äquimolare Mengen an DCC (Dicyclohexylcarbodiimid) und an 1.4-Diaminobutan und katalytische Mengen an Dimethylaminopyridin zusetzt und somit die -$SO_3H$ Gruppen tragende Polymerketten unter Wasserabspaltung über 1.4-Diaminobutan-Brücken verknüpft.

Die Zahl der -$SO_3X$ Gruppen der kationenselektiven Schicht bestimmt die Ladungsdichte und damit die Austauscherkapazität der kationenselektiven Schicht, und die Zahl der Verknüpfungsstellen zwischen den Polymer-Ketten bestimmt die Vernetzungsdichte der kationenselektiven Schicht und damit deren Quellverhalten, wobei die Ladungsdichte und die Vernetzungsdichte unabhängig voneinander variiert werden können, sodaß die Austauscherkapazität und das Quellverhalten unabhängig voneinander gezielt den Erfordernissen des jeweiligen Anwendungsfalles angepaßt werden können.

Mit diesen Ausführungsformen des erfindungsgemäßen Verfahrens ist es möglich geworden, bipolare Membranen herzustellen, die einen geringen elektrischen Widerstand zeigen, die über eine hohe Wasserspaltungskapazität verfügen und bei denen die Austauscherkapazität und das Quellverhalten der kationenselektiven Schicht unabhängig voneinander gezielt variiert werden können.

Mit diesen Ausführungsformen des erfindungsgemäßen Verfahrens ist es ferner möglich geworden, bipolare Membranen herzustellen, die einen geringen elektrischen Widerstand zeigen, die über eine hohe Wasserspaltungskapazität verfügen, deren anionenselektive Schicht in stark alkalischen Lösungen stabil ist, bei denen die Austauscherkapazität und das Quellverhalten der anionenselektiven und der kationenselektiven Schicht unabhängig voneinander

gezielt variiert werden können und bei denen die Austauscherkapazität und das Quellverhalten der anionenselektiven und der kationenselektiven Schicht gezielt aufeinander abgestimmt werden können.

In einer weiteren Ausführungsform des erfindungsgemäßen Verfahrens wird die Oberfläche der kationenselektiven Schicht durch Beschichten mit einer alkoholischen 0.5 bis 10 %-igen, bevorzugt einer 5 %-igen Lösung von perfluorierten Polymeren modifiziert. Diese Beschichtung kann z.B. durch Tauchen oder Sprühen erfolgen. Besonders gute Ergebnisse werden mit einer 5 %-igen Nafion$^R$-Lösung erzielt. Diese Schutzschicht bringt eine Verbesserung der Stabilität gegenüber oxidierenden Medien mit sich. Eine praktische Anwendung hierfür ist z.B. der Einsatz der erfindungsgemäßen Membranen bei der Herstellung von Salpetersäure aus Nitraten. Ferner können die so modifizierten erfindungsgemäßen Membranen unmittelbar vor der Anode angeordnet werden, wodurch in der Praxis auf den Spülkreislauf verzichtet werden kann.

In einer weiteren Ausführungsform des erfindungsgemäßen Verfahrens werden die bipolaren Membranen zur irreversiblen Einstellung der Netzwerkdichte 1 Tag mit 1 n KOH behandelt, indem die erfindungsgemäßen Membranen in die KOH-Lösung getaucht werden.

Geeignete Polymere zur Herstellung der anionen- und kationenselektiven Schichten sind z.B. die käuflich erwerbbaren Produkte Hostyren N2000$^R$ (Polystyrol der Firma Hoechst), PEEK 450 G$^R$ (Polyetheretherketon der Firma ICI), Udel P3500$^R$ (Polysulfon der Firma Amoco), Victrex 5200P$^R$ (Polyethersulfon der Firma ICI) und Ultem 6000 (Polyetherimid der Firma General Electric).

Bei dem für die Oberflächenmodifizierung der kationenselektiven Schicht verwendetem perfluorierten Polymer Nafion$^R$ handelt es sich um ein Copolymer von Tetrafluorethylen mit $F\text{-}S(O_2)\text{-}CF_2\text{-}CF_2\text{-}(OC(CF_3)F\text{-}CF_2)_m\text{-}OCF{=}CF_2$, welches folgende Struktur aufweist:

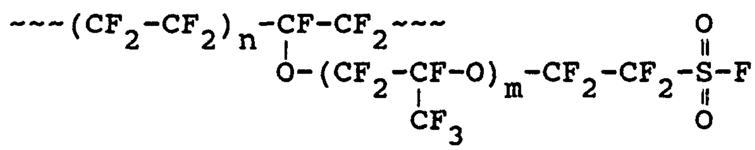

wobei die $-SO_2F$ Gruppe mit NaOH in die $-SO_3H$ Gruppe übergeführt wird.

Zur mechanischen Stabilisierung und um insbesondere hydraulische Beanspruchungen abzufangen, werden die erfindungsgemäßen Membranen mit Polymergeweben verstärkt. Ein weiterer Vorteil der eingearbeiteten Polymergewebe besteht darin, daß sie die Quellung der erfindungsgemäßen Membran in der Fläche verhindern, nur noch eine Quellung in der Höhe erlauben, und somit bewirken, daß die erfindungsgemäßen Membranen in Module packbar sind, was unter anderem deren Handhabung vereinfacht.

Das Polymergewebe kann entweder in die anionenselektive oder in die kationenselektive Schicht oder zwischen diese beiden Schichten gegeben werden. Dies geschieht zweckmäßigerweise durch Kaschieren, z.B. durch Naß-Kaschieren, in dem das Polymergewebe in die naße, gerakelte Polymerlösung L2 eingedrückt wird. Dabei kann das Lösungsmittel der Polymerlösung das Polymergewebe etwas anquellen, was zu einer innigen Verbindung führt. Soll das Polymergewebe in die kationenselektive Schicht eingebaut werden, so wird bei der Fertigung der erfindungsgemäßen Membran mit der anionenselektiven Schicht begonnen, beim Einbau in die anionenselektive Schicht mit der kationenselektiven.

Soll das Polymergewebe zwischen die beiden ionenselektiven Schichten plaziert werden, so wird dazu die erste ionenselektive Schicht nach dem erfindungsgemäßen Verfahren gefertigt, das Lösungsmittel der Polymerlösung L1 entfernt, das Polymergewebe auf den trockenen Polymerfilm gegeben und mit der Polymerlösung L2 beschichtet.

Geeignete Polymergewebe sollten säuren- und/oder basenstabil sein, sowie bedingt lösungsmittelstabil. Nicht basenstabile Polymergewebe werden zweckmäßigerweise in die kationenselektive Schicht gegeben. Bevorzugt ist es, wenn ein monofiles Polymergewebe verwendet wird. Ohne Einschränkung der Allgemeinheit bestehen geeingete Polymergewebe aus Polyamid, Polyester, Polyvinylidenfluorid, Polyetheretherketon, Polypropylen, Polyethylen oder Polyphenylensulfid.

Als zweckdienlich hat es sich erwiesen, wenn das verwendete Polymergewebe eine maximale freie Fläche von mindestens 30 % aufweist, wobei eine maximale freie Fläche von mindestens 50 % bevorzugt ist. Die Dicke des Polymergewebes ist so gewählt, daß das Gewebe vollständig ummantelt ist und aus der Membran nicht herausragt, und sie sollte dabei unterhalb 300 µm liegen. Bevorzugt ist es, wenn das Polymergewebe dünner als 200 µm ist.

Anhand von Ausführungsbeispielen wird die Herstellung der erfindungsgemäßen bipolaren Membranen näher erläutert.

**Beispiel 1:**

Zur Herstellung der bipolaren Membran wird mit der Herstellung der anionenselektiven Schicht begonnen. 10 g einer 15 %-igen Lösung von chlormethyliertem Polysulfon (2 meq/g) in NMP werden mittels eines Ultraturax mit einer Lösung von 0.32 g 1.4-Diazabicyclo[2.2.2]octan (DABCO) in 5 g NMP vermischt. Während 30 Sekunden wird ein Film (400 µm) bei 60 °C und 95 % relative Luftfeuchtigkeit gerakelt, 10 Sekunden mit Wasserdampf (100 °C) behandelt und 10 Minuten bei 60 °C und 95 % relativer Luftfeuchtigkeit konditioniert. Anschließend wird das Lösungsmittel bei 125 °C in Umluft abgedampft. Nach dem vollständigen Abdampfen des Lösungsmittels wird die Lösung der kationenselektiven Schicht (8 % sulfoniertes Polyetheretherketon in NMP) direkt auf die phaseninvertierte Anionenschicht mit 600 µm gerakelt. Als Trocknungsbedingungen genügen 125 °C und 10 Minuten.

Figur 2 zeigt den Zusammenhang zwischen Potentialabfall [V] und Stromdichte i [$mA/cm^2$] für eine bipolare Membran (Bip-PSUbi), die durch Beschichten eines anionenselektiven Films mit einer Lösung von sulfoniertem PEEK hergestellt wurde, eine bipolare Membran (Bip-PSUmulti), die nach der DE 4026154 A1 hergestellt wurde und für eine bipolare Membran entsprechend Beispiel 1 der vorliegenden Erfindung.

**Beispiel 2:**

14 g einer 10 %-igen Lösung von chlormethyliertem Polystyrol (5.8 meq/g) in NMP werden mit 10.5 g einer 20 %-igen Lösung von Polyethersulfon in NMP vermischt. Nun werden 0.66 g DABCO in 5 ml einer Lösung von DMAc/DMSO = 1:1 mittels eines Ultraturax eingetragen. Während 60 Sekunden wird ein Film (300 µm) bei 50 °C und 95 % relativer Luftfeuchtigkeit gerakelt, 10 Sekunden mit Wasserdampf behandelt, 10 Minuten bei 60 °C und 95 % relativer Luftfeuchtigkeit konditioniert und das Lösungsmittel bei 130 °C abgedampft. Nun wird die Lösung der kationenselektiven Schicht, 5 Gew.-% sulfoniertes Polyetheretherketonketon (PEEKK) mit einer Festladungsdichte von 1.8 meq $-SO_3Zr$/g Polymer aufgerakelt (800 µm), ein PEEK-Gewebe kaschiert und bei 130 °C während 20 Minuten abgedampft. Die gewebeverstärkte Membran wird schließlich zur irreversiblen Vernetzung während 15 Minuten in 1 molarer kochender Natronlauge konditioniert.

**Beispiel 3**:

22 g einer 12 %-igen Lösung von bromiertem Polyphenylenoxid (4.1 meq/g) in NMP werden mit 0.73 g DABCO in 5 ml einer Lösung von DMAc/DMSO = 1:1 mittels eines Ultraturax vermischt. Während 20 Sekunden wird ein Film (300 µm) bei 50 °C und 95 % relativer Luftfeuchtigkeit gerakelt, 10 Sekunden mit Wasserdampf behandelt, 10 Minuten bei 60 °C und 95 % relativer Luftfeuchtigkeit konditioniert und das Lösungsmittel bei 130 °C abgedampft. Nun wird die Lösung der kationenselektiven Schicht, 1 Gew.-% sulfoniertes Polyetheretherketon (PEEK) mit einer Festladungsdichte von 0.9 meq $-SO_3Ru$/g Polymer aufgesprüht und getrocknet. Diese wird wiederum mit einer Lösung von 5 Gew.-% sulfoniertes Polyetheretherketon mit einer Festladungsdichte von 1.1 meq $SO_3H$/g Polymer beschichtet (800 µm), ein PPS-Gewebe kaschiert und bei 130 °C während 20 Minuten abgedampft. Die gewebeverstärkte Membran wird schließlich zur irreversiblen Vernetzung während 15 Minuten in 1 molarer kochender Natronlauge konditioniert.

**Patentansprüche**

1. Bipolare Membran, dadurch erhältlich, daß man aus flüssiger Phase eine erste ionenselektive Schicht fertigt und auf diese aus flüssiger Phase eine zweite ionenselektive Schicht mit entgegengesetzter Ladung aufbringt, **dadurch gekennzeichnet,** daß man aus einer Polymerlösung L1 eine ionenselektive Schicht erzeugt, indem man die Lösung L1 zu einem Film ausstreicht, daß man während des Ausstreichens den resultierenden Polymerfilm einem wasserdampfhaltigen oder mit Wasserdampf gesättigten, inerten Gas oder Gasgemisch mit einer relativen Luftfeuchtigkeit von 95-100% aussetzt, daß man das Lösungsmittel entfernt, und daß man auf der Seite der resultierenden, ionenselektiven Schicht, die dem wasserdampfhaltigen Gas oder Gasgemisch ausgesetzt war, aus einer Polymerlösung L2 eine zweite ionenselektive Schicht mit entgegengesetzter Ladung erzeugt.

2. Bipolare Membran nach Anspruch 1, **dadurch gekennzeichnet,** daß das wasserdampfhaltige oder mit Wasserdampf gesättigte Gas oder Gasgemisch wasserdampfhaltige oder mit Wasserdampf gesättigte Luft ist.

3. Bipolare Membran nach Anspruch 1 oder 2, **dadurch gekennzeichnet,** daß man vor dem Entfernen des Lösungsmittels der Polymerlösung L1 den Polymerfilm 5 bis 300 Sekunden einem Wasserdampf von 100 °C aussetzt.

4. Bipolare Membran nach einem oder mehreren der Ansprüche 1 bis 3, **dadurch gekennzeichnet,** daß man vor

dem Entfernen des Lösungsmittels der Polymerlösung L1 und gegebenenfalls nach dem Behandeln mit 100 °C-heißem Wasserdampf den Polymerfilm 3 bis 60 Minuten bei Temperaturen zwischen 25 und 85 °C und bei einer relativen Luftfeuchtigkeit von 60 bis 95 % hält.

**5.** Bipolare Membran nach einem oder mehreren der Ansprüche 1 bis 4, **dadurch gekennzeichnet,** daß die Polymerlösung L1 bzw. L2 zur Herstellung der anionenselektiven Schicht jeweils eine homogene Lösung eines polymeren Alkylierungsmittels und eines monomeren Amins, oder eines polymeren Amins und eines monomeren Alkylierungsmittels, oder eines polymeren Alkylierungsmittels und eines polymeren Amins darstellt.

**6.** Bipolare Membran nach Anspruch 5, **dadurch gekennzeichnet**, daß das monomere Amin DABCO (1.4-Diazabicyclo-[2.2.2]-octan), 1.3-Bis(dimethylamino-2.2-dimethylpropan) oder ein anderes Diamin (I) ist, welches alkalistabile, quartäre Ammonium-Ionen zu bilden vermag und bei welchem die Monoquaternisierung gegenüber der Bisquaternisierung durch eine unterschiedliche Nucleophilie von mindestens $\Delta pK_a > 1.0$ begünstigt wird.

**7.** Bipolare Membran nach Anspruch 6, **dadurch gekennzeichnet,** daß das DABCO, das 1.3-Bis(dimethylamino-2.2-dimethylpropan) oder das Diamin (I) im Unterschuß eingesetzt ist, bezogen auf das polymere Alkylierungsmittel, sodaß neben einer vollständigen Monoquaternisierung der Diamine auch noch eine teilweise Bisquaternisierung erfolgt, und die anionenselektive Schicht mit

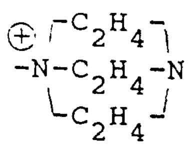 , oder $\overset{\oplus}{-N}(CH_3)_2-CH_2-C(CH_3)_2-CH_2-N(CH_3)_2$

oder anderen quartären Ammonium-Gruppen versehen ist, die aus dem Diamin (I) gebildet sind, und die Polymerketten der anionenselektiven Schicht über

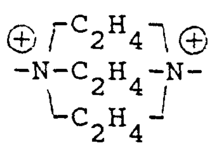 und/oder über 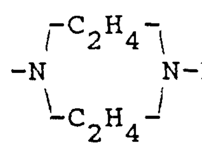-Brücken,

bzw über

$$\overset{\oplus}{-N}(CH_3)_2-CH_2-C(CH_3)_2-CH_2-\overset{\oplus}{N}(CH_3)_2-$$

und/oder über -NH-$CH_2$-$C(CH_3)_2$-$CH_2$-NH-Brücken oder über andere aus dem Diamin (I) gebildete Diamin-Brükken verknüpft sind.

**8.** Bipolare Membran nach Anspruch 5, **dadurch gekennzeichnet,** daß das monomere Alkylierungsmittel neo-Pentylbromid oder 1.3-Dibrom-2.2-dimethylpropan oder die andere $\alpha,\omega$ - Dihalogen-Komponente (II) ist, welche mit den Amino-Gruppen des polymeren Amins alkalistabile, quartäre Ammonium-Gruppen zu bilden vermag.

**9.** Bipolare Membran nach Anspruch 8, **dadurch gekennzeichnet,** daß das 1.3-Dibrom-2.2-dimethylpropan oder die andere $\alpha,\omega$ - Dihalogen-Komponenete (II) im Unterschuß eingesetzt ist, bezogen auf das polymere Amin, sodaß die Polymerketten der anionenselektiven Schicht über Diamin-Brücken verknüpft sind, welche aus den Amino-Gruppen des polymeren Amin und dem bifunktionellen Alkylierungsmittel (II) gebildet sind.

**10.** Bipolare Membran nach einem oder mehreren der Ansprüche 1 bis 9, **dadurch gekennzeichnet,** daß die Polymerlösung L1 bzw. L2 zur Herstellung der kationenselektiven Schicht jeweils eine homogene Lösung eines sulfonierten Polymers, oder einer Mischung aus sulfonierten Polymeren, oder einer Mischung aus sulfonierten und nicht-sulfonierten Polymeren ist, wobei es sich bei den sulfonierten Polymeren um solche handelt, welche -$SO_3X$-Gruppen tragen mit X = H, $NH_2$ oder $M^{y+}$, wobei M ein Element der 1. bis 4. Haupt- oder Nebengruppe ist, bevorzugt

Na oder K, und innerhalb einer kationenselektiven Schicht verschiedene Reste X vorhanden sein können.

**11.** Bipolare Membran nach einem oder mehreren der Ansprüche 1 bis 10, **dadurch gekennzeichnet,** daß die kationenselektive Schicht definiert vernetzt ist, indem der homogenen Lösung L1 bzw. L2 entsprechend dem gewünschten Vernetzungsgrad äquimolare Mengen an DCC (Dicyclohexylcarbodiimid) und an 1.4-Diaminobutan und katalytische Mengen an Dimethylaminopyridin zugesetzt sind, und $-SO_3H$ Gruppen tragende Polymerketten unter Wasserabspaltung über 1.4-Diaminobutan-Brücken verknüpft sind.

**12.** Bipolare Membran nach einem oder mehreren der Ansprüche 1 bis 11, **dadurch gekennzeichnet,** daß die Oberfläche der kationenselektiven Schicht durch Beschichten mit einer alkoholischen, 0.5 bis 10 %-igen, bevorzugt mit einer 5 %-igen Lösung von perfluorierten Polymeren modifiziert ist.

**13.** Bipolare Membran nach einem oder mehreren der Ansprüche 1 bis 12, **dadurch gekennzeichnet,** daß die bipolare Membran zur irreversiblen Einstellung der Netzwerkdichte 1 Tag mit 1 n KOH behandelt ist.

**14.** Bipolare Membran nach einem oder mehreren der Ansprüche 1 bis 13, **dadurch gekennzeichnet,** daß sie zur mechanischen Verstärkung in der anionen- oder in der kationenselektiven Schicht oder zwischen diesen beiden Schichten ein Polymergewebe enthält.

**15.** Verfahren zur Herstellung der bipolaren Membranen nach einem oder mehreren der Ansprüche 1 bis 14, indem man aus flüssiger Phase eine erste ionenselektive Schicht fertigt und auf diese aus flüssiger Phase eine zweite ionenselektive Schicht mit entgegengesetzter Ladung aufbringt, **dadurch gekennzeichnet,** daß man aus einer Polymerlösung L1 eine erste ionenselektive Schicht erzeugt, indem man die Lösung L1 zu einem Film ausstreicht, daß man während des Ausstreichens den resultierenden Polymerfilm einem wasserdampfhaltigen oder mit Wasserdampf gesättigten, inerten Gas oder Gasgemisch mit einer relativen Luftfeuchtigkeit von 95-100% aussetzt, daß man das Lösungsmittel entfernt, und daß man auf der Seite der resultierenden, ionenselektiven Schicht, die dem wasserdampfhaltigen Gas oder Gasgemisch ausgesetzt war, aus einer Polymerlösung L2 eine zweite ionenselektive Schicht mit entgegengesetzter Ladung erzeugt.

**16.** Verfahren nach Anspruch 15, **dadurch gekennzeichnet,** daß man als wasserdampfhaltiges oder mit Wasserdampf gesättigtes Gas oder Gasgemisch wasserdampfhaltige oder mit Wasserdampf gesättigte Luft einsetzt.

**17.** Verfahren nach Anspruch 15 oder 16, **dadurch gekennzeichnet,** daß man vor dem Entfernen des Lösungsmittels der Polymerlösung L1 den Polymerfilm 5 bis 300 Sekunden einem Wasserdampf von 100 °C aussetzt.

**18.** Verfahren nach einem oder mehreren der Ansprüche 15 bis 17, **dadurch gekennzeichnet,** daß man vor dem Entfernen des Lösungsmittels der Polymerlösung L1 und gegebenenfalls nach dem Behandeln mit 100 °C-heißem Wasserdampf den Polymerfilm 3 bis 60 Minuten bei Temperaturen zwischen 25 und 85 °C und bei einer relativen Luftfeuchtigkeit von 60 bis 95 % hält.

**19.** Verfahren nach einem oder mehreren der Ansprüche 15 bis 18, **dadurch gekennzeichnet,** daß man als Polymerlösung L1 bzw. L2 zur Herstellung der anionenselektiven Schicht jeweils eine homogene Lösung eines polymeren Alkylierungsmittels und eines monomeren Amins, oder eines polymeren Amins und eines monomeren Alkylierungsmittels, oder eines polymeren Alkylierungsmittels und eines polymeren Amins verwendet.

**20.** Verfahren nach Anspruch 19, **dadurch gekennzeichnet,** daß man als monomeres Amin DABCO (1.4-Diazabicyclo-[2.2.2]octan), 1.3-Bis(dimethylamino-2.2-dimethylpropan) oder ein anderes Diamin (I) verwendet, welches alkalistabile, quartäre Ammonium-Ionen zu bilden vermag und bei welchem die Monoquaternisierung gegenüber der Bisquaternisierung durch eine unterschiedliche Nucleophilie von mindestens $\Delta pK_a > 1.0$ begünstigt wird.

**21.** Verfahren nach Anspruch 20, **dadurch gekennzeichnet,** daß man das DABCO, das 1.3-Bis(dimethylamino-2.2-dimethylpropan) oder das Diamin (I) im Unterschuß einsetzt, bezogen auf das polymere Alkylierungsmittel, sodaß man neben einer vollständigen Monoquaternisierung der Diamine auch noch eine teilweise Bisquaternisierung durchführt, und man die anionenselektive Schicht mit

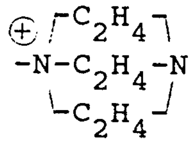 , oder $-\overset{\oplus}{N}(CH_3)_2-CH_2-C(CH_3)_2-CH_2-N(CH_3)_2$

oder anderen quartären Ammonium-Gruppen versieht, die aus dem Diamin (I) gebildet werden, und man die Polymerketten der anionenselektiven Schicht über

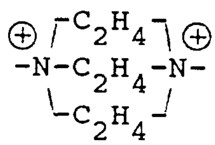 und/oder über 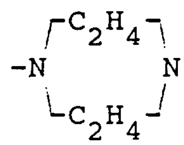-Brücken,

bzw. über

$$-\overset{\oplus}{N}(CH_3)_2-CH_2-C(CH_3)_2-CH_2-\overset{\oplus}{N}(CH_3)_2-$$

und/oder über $-NH-CH_2-C(CH_3)_2-CH_2-NH$-Brücken oder über andere aus dem Diamin (I) gebildete Diamin-Brükken verknüpft.

**22.** Verfahren nach Anspruch 19, **dadurch gekennzeichnet,** daß man als monomeres Alkylierungsmittel neo-Pentylbromid oder 1.3-Dibrom-2.2-dimethylpropan oder eine andere α,ω-Dihalogen-Komponente (II) einsetzt, welche mit den Amino-Gruppen des polymeren Amins alkalistabile, quartäre Ammonium-Gruppen zu bilden vermag.

**23.** Verfahren nach Anspruch 22, **dadurch gekennzeichnet,** daß man das 1.3-Dibrom-2.2-dimethylpropan oder die andere α,ω-Dihalogen-Komponenete (II) im Unterschuß einsetzt, bezogen auf das polymere Amin, sodaß man die Polymerketten der anionenselektiven Schicht über Diamin-Brücken verknüpft, welche aus den Amino-Gruppen des polymeren Amin und dem bifunktionellen Alkylierungsmittel (II) gebildet werden.

**24.** Verfahren nach einem oder mehreren der Ansprüche 15 bis 23, **dadurch gekennzeichnet,** daß man als Polymerlösung L1 bzw. L2 zur Herstellung der kationenselektiven Schicht jeweils eine homogene Lösung eines sulfonierten Polymers, oder einer Mischung aus sulfonierten Polymeren, oder einer Mischung aus sulfonierten und nicht-sulfonierten Polymeren verwendet, wobei es sich bei den sulfonierten Polymeren um solche handelt, welche $-SO_3X$-Gruppen tragen mit X = H, $NH_2$ oder $M^{y+}$, wobei M ein Element der 1. bis 4. Haupt- oder Nebengruppe ist, bevorzugt Na oder K, und innerhalb einer kationenselektiven Schicht verschiedene Reste X vorhanden sein können.

**25.** Verfahren nach einem oder mehreren der Ansprüche 15 bis 24, **dadurch gekennzeichnet,** daß man die kationenselektive Schicht definiert vernetzt, indem man der homogenen Lösung L1 bzw. L2 entsprechend dem gewünschten Vernetzungsgrad äquimolare Mengen an DCC (Dicyclohexylcarbodiimid) und an 1.4-Diaminobutan und katalytische Mengen an Dimethylaminopyridin zusetzt, und $-SO_3H$ Gruppen tragende Polymerketten unter Wasserabspaltung über 1.4-Diaminobutan-Brücken verknüpft.

**26.** Verfahren nach einem oder mehreren der Ansprüche 15 bis 25, **dadurch gekennzeichnet,** daß man die Oberfläche der kationenselektiven Schicht durch Beschichten mit einer alkoholischen, 0.5 bis 10 %-igen, bevorzugt mit einer 5 %-igen Lösung von perfluorierten Polymeren modifiziert.

**27.** Verfahren nach einem oder mehreren der Ansprüche 15 bis 26, **dadurch gekennzeichnet,** daß man die bipolare Membran zur irreversiblen Einstellung der Netzwerkdichte 1 Tag mit 1 n KOH behandelt.

**28.** Verfahren nach einem oder mehreren der Ansprüche 15 bis 27, **dadurch gekennzeichnet,** daß man in die kationen- oder in die anionenselektive Schicht oder zwischen diese beiden Schichten ein Polymergewebe einbringt.

**29.** Verwendung der bipolaren Membran nach einem oder mehreren der Ansprüche 1 bis 14 bei der Elektrodialyse.

## Claims

1. Bipolar membrane, obtainable in that a first ion-selective layer is produced from the liquid phase and to this layer is applied from the liquid phase a second ion-selective layer with an opposite charge, **characterised in that** an ion-selective layer is produced from a polymer solution L1 by the solution L1 being spread out to form a film, in that, during the spreading-out process, the resulting polymer film is exposed to an inert gas or gas mixture which contains water vapour or is saturated with water vapour and has a relative humidity of 95-100%, in that the solvent is removed, and in that on the side of the resulting ion-selective layer, which was exposed to the gas or gas mixture containing water vapour, a second ion-selective layer with an opposite charge is produced from a polymer solution L2.

2. Bipolar membrane according to claim 1, **characterised in that** the gas or gas mixture which contains water vapour or is saturated with water vapour is air containing water vapour or saturated with same.

3. Bipolar membrane according to claim 1 or 2, **characterised in that** that before the solvent of the polymer solution L1 is removed, the polymer film is exposed for 5 to 300 seconds to a water vapour at 100°C.

4. Bipolar membrane according to one or more of claims 1 to 3, **characterised in that** before the solvent of the polymer solution L1 is removed and possibly after treatment with water vapour at 100°C, the polymer film is kept for 3 to 60 minutes at temperatures between 25 and 85°C and at a relative humidity of 60 to 95%.

5. Bipolar membrane according to one or more of claims 1 to 4, **characterised in that** the polymer solution L1 or L2 to produce the anion-selective layer in each case represents a homogenous solution of a polymer alkylation agent and a monomer amine, or of a polymer amine and a monomer alkylation agent, or of a polymer alkylation agent and a polymer amine.

6. Bipolar membrane according to claim 5, **characterised in that** the monomer amine is DABCO (1.4-diazabicyclo [2.2.2]-octane, 1.3-bis(dimethyl-amino-2.2-dimethylpropane) or some other diamine (I), which is capable of forming alkali-stable, quaternary ammonium ions and in which mono-quaternization is favoured in relation to bis-quaternization by a different nucleophilicity of at least

$$\Delta pK_a > 1.0$$

7. Bipolar membrane according to claim 6, **characterised in that** the DABCO, the 1.3-bis(dimethylamino-2.2-dimethylpropane) or the diamine (I) is used in a lesser amount in relation to the polymer alkylation agent, such that in addition to a complete mono-quaternization of the diamines, a partial bis-quaternization also takes place and the anion-selective layer is provided with

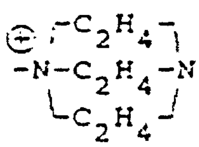

, or

$$\overset{\oplus}{-N}(CH_3)_2-CH_2-C(CH_3)_2-CH_2-N(CH_3)_2$$

or other quaternary ammonium groups which are formed from the diamine (I), and the polymer chains of the anion-selective layer are linked via

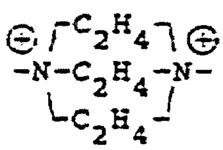

and/or via

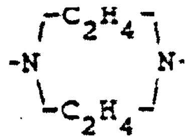

bridges, or respectively via

$$-\overset{\oplus}{N}(CH_3)_2-CH_2-C(CH_3)_2-CH_2-\overset{\oplus}{N}(CH_3)_2$$

bridges and/or via -NH-$CH_2$-C$(CH_3)_2$-$CH_2$-NH bridges or via other diamine bridges formed from the diamine (I).

**8.** Bipolar membrane according to claim 5, **characterised in that** the monomer alkylation agent is neopentyl bromide or 1.3-dibromo-2.2-dimethylpropane or some other a,w-dihalogen component (II) which is capable of forming alkali-stable quaternary ammonium groups with the amino groups of the polymer amine.

**9.** Bipolar membrane according to claim 8, **characterised in that** the 1.3-dibromo-2.2-dimethylpropane or the other a,w-dihalogen component (II) is used in a lesser amount in comparison with the polymer amine, such that the polymer chains of the anion-selective layer are linked via diamine bridges which are formed from the amino groups of the polymer amine and from the bifunctional alkylation agent (II).

**10.** Bipolar membrane according to one or more of claims 1 to 9, **characterised in that** the polymer solution L1 or L2 to produce the cation-selective layer is in each case a homogenous solution of a sulphonated polymer, or of a mixture of sulphonated polymers, or of a mixture of sulphonated and non-sulphonated polymers, the sulphonated polymers being those which bear -$SO_3$X groups with X = H, $NH_2$ or $M^{y+}$, M being an element of the 1st to 4th main group or subgroup, preferably Na or K, and various residues X being able to be present within a cation-selective layer.

**11.** Bipolar membrane according to one or more of claims 1 to 10, **characterised in that** the cation-selective layer is cross-linked in a defined manner, by equimolar amounts of DCC (dicyclohexylcarbodiimide) and of 1.4-diaminobutane and catalytic amounts of dimethylaminopyridine being added to the homogenous solution L1 or L2 according to the desired degree of cross-linking, and polymer chains bearing -$SO_3$H groups being linked via 1.4-diaminobutane bridges with elimination of water.

**12.** Bipolar membrane according to one or more of claims 1 to 11, **characterised in that** the surface of the cation-selective layer is modified by being coated with an alcohol, 0.5 to 10%, solution of perfluorinated polymers, preferably with a 5% solution of same.

**13.** Bipolar membrane according to one or more of claims 1 to 12, **characterised in that** the bipolar membrane is treated for 1 day with 1 n KOH in order to set irreversibly the network density.

**14.** Bipolar membrane according to one or more of claims 1 to 13, **characterised in that,** for mechanical reinforcement, it contains a polymer tissue in the anion-selective or the cation-selective layer or between these two layers.

**15.** Method of producing the bipolar membranes according to one or more of claims 1 to 14, by producing a first ion-selective layer from the liquid phase and applying to this layer from the liquid phase a second ion-selective layer with an opposite charge,
**characterised in that** a first ion-selective layer is produced from a polymer solution L1, by spreading the solution L1 out to form a film, in that, during the spreading-out process, the resulting polymer film is exposed to an inert gas or gas mixture which contains water vapour or is saturated with water vapour and has a relative humidity of 95-100%, in that the solvent is removed, and in that on the side of the resulting ion-selective layer, which was exposed to the gas or gas mixture containing water vapour, a second ion-selective layer with an opposite charge is produced from a polymer solution L2.

**16.** Method according to claim 15, **characterised in that** air containing water vapour or saturated with same is used as the gas or gas mixture which contains water vapour or is saturated with water vapour.

**17.** Method according to claim 15 or 16, **characterised in that** that before the solvent of the polymer solution L1 is removed, the polymer film is exposed for 5 to 300 seconds to a water vapour at 100°C.

**18.** Method according to one or more of claims 15 to 17, **characterised in that** before the solvent of the polymer solution L1 is removed and possibly after treatment with water vapour at 100°C, the polymer film is kept for 3 to 60 minutes at temperatures between 25 and 85°C and at a relative humidity of 60 to 95%.

**19.** Method according to one or more of claims 15 to 18, **characterised in that** as the polymer solution L1 or L2 to produce the anion-selective layer, in each case a homogenous solution of a polymer alkylation agent and a monomer amine is used, or of a polymer amine and a monomer alkylation agent, or of a polymer alkylation agent and a polymer amine.

**20.** Method according to claim 19, **characterised in that** as the monomer amine, DABCO (1.4-diazabicycio[2.2.2]-octane, 1.3-bis(dimethylamino-2.2-dimethylpropane) or some other diamine (I) is used, which is capable of forming alkali-stable, quaternary ammonium ions and in which mono-quaternization is favoured in relation to bis-quaternization by a different nucleophilicity of at least

$$\Delta pK_a > 1.0$$

**21.** Method according to claim 20, **characterised in that** the DABCO, the 1.3-bis(dimethylamino-2.2-dimethylpropane) or the diamine (I) is used in a lesser amount in relation to the polymer alkylation agent, such that in addition to a complete mono-quaternization of the diamines, a partial bis-quaternization is also carried out and the anion-selective layer is provided with

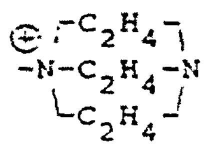

, or

$$-\overset{\oplus}{N}(CH_3)_2-CH_2-C(CH_3)_2-CH_2-N(CH_3)_2$$

or other quaternary ammonium groups which are formed from the diamine (I), and the polymer chains of the anion-selective layer are linked via

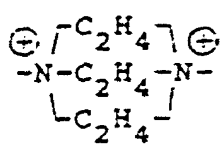

and/or via

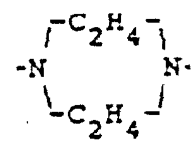

bridges, or respectively via

$$-\overset{\oplus}{N}(CH_3)_2-CH_2-C(CH_3)_2-CH_2-\overset{\oplus}{N}(CH_3)_2$$

bridges and/or via -NH-$CH_2$-C$(CH_3)_2$-$CH_2$-NH bridges or via other diamine bridges formed from the diamine (I).

**22.** Method according to claim 19, **characterised in that** as the monomer alkylation agent, neopentyl bromide or 1.3-dibromo-2.2-dimethylpropane or some other a,w-dihalogen component (II) is used which is capable of forming alkali-stable quaternary ammonium groups with the amino groups of the polymer amine.

**23.** Method according to claim 22, **characterised in that** the 1.3-dibromo-2.2-dimethylpropane or the other a,w-dihalogen component (II) is used in a lesser amount in comparison with the polymer amine, such that the polymer chains of the anion-selective layer are linked via diamine bridges which are formed from the amino groups of the polymer amine and from the bifunctional alkylation agent (II).

**24.** Method according to one or more of claims 15 to 23, **characterised in that** as the polymer solution L1 or L2 to produce the cation-selective layer, in each case a homogenous solution of a sulphonated polymer, or of a mixture of sulphonated polymers, or of a mixture of sulphonated and non-sulphonated polymers is used, the sulphonated polymers being those which bear -$SO_3$X groups with X = H, $NH_2$ or $M^{y+}$, M being an element of the 1st to 4th main group or subgroup, preferably Na or K, and various residues X being able to be present within a cation-selective

layer.

**25.** Method according to one or more of claims 15 to 24, **characterised in that** the cation-selective layer is cross-linked in a defined manner, by equimolar amounts of DCC (dicyclohexylcarbodiimide) and of 1.4-diaminobutane and catalytic amounts of dimethylaminopyridine being added to the homogenous solution L1 or L2 according to the desired degree of cross-linking, and polymer chains bearing $-SO_3H$ groups being linked via 1.4-diaminobutane bridges with elimination of water.

**26.** Method according to one or more of claims 15 to 25, **characterised in that** the surface of the cation-selective layer is modified by being coated with an alcohol, 0.5 to 10%, solution of perfluorinated polymers, preferably with a 5% solution.

**27.** Method according to one or more of claims 15 to 27, **characterised in that** the bipolar membrane is treated for 1 day with 1 n KOH in order to set irreversibly the network density.

**28.** Method according to one or more of claims 15 to 27, **characterised in that** a polymer tissue is introduced into the cation-selective or the anion-selective layer or between these two layers.

**29.** Use of the bipolar membrane according to one or more of claims 1 to 14 during electrodialysis.

**Revendications**

**1.** Membrane bipolaire, pouvant être obtenue par préparation, à partir de la phase liquide, d'une première couche sélective d'ions, et application sur celle-ci, à partir de la phase liquide, d'une seconde couche sélective d'ions, de charge opposée,
caractérisée en ce qu'
à partir d'une solution de polymère L1, on produit une couche sélective d'ions en étalant la solution L1 en une pellicule, pendant l'étalement, on expose la pellicule de polymère résultante à un gaz inerte ou mélange de gaz inertes, ayant une humidité relative de 95-100 %, contenant de la vapeur d'eau ou saturé de vapeur d'eau, on élimine le solvant et, sur la face de la couche sélective d'ions résultante qui a été exposée au gaz ou mélange de gaz contenant de la vapeur d'eau, on produit à partir d'une solution de polymère L2 une seconde couche sélective d'ions, de charge opposée.

**2.** Membrane bipolaire selon la revendication 1,
caractérisée en ce que
le gaz ou mélange de gaz contenant de la vapeur d'eau ou saturé de vapeur d'eau est de l'air contenant de la vapeur d'eau ou saturé de vapeur d'eau.

**3.** Membrane bipolaire selon la revendication 1 ou 2,
caractérisée en ce qu'
avant l'élimination du solvant de la solution de polymère L1, on expose pendant 5 à 300 secondes la pellicule de polymère à une vapeur d'eau à 100°C.

**4.** Membrane bipolaire selon une ou plusieurs des revendications 1 à 3,
caractérisée en ce qu'
avant l'élimination du solvant de la solution de polymère L1 et éventuellement après le traitement par de la vapeur d'eau à 100°C, on maintient la pellicule de polymère pendant 3 à 60 minutes à des températures comprises entre 25 et 85°C et à une humidité relative de l'air de 60 à 95 %.

**5.** Membrane bipolaire selon une ou plusieurs des revendications 1 à 4,
caractérisée en ce que
la solution de polymère L1 ou L2 pour la préparation de la couche sélective d'anions représente dans chaque cas une solution homogène d'un agent d'alkylation polymère et d'une amine monomère, ou d'une amine polymère et d'un agent d'alkylation monomère, ou d'un agent d'alkylation polymère et d'une amine polymère.

**6.** Membrane bipolaire selon la revendication 5,
caractérisée en ce que

l'amine monomère est le DABCO (1,4-diazabicyclo[2.2.2]octane), le 1,3-bis(diméthylamino-2,2-diméthylpropane) ou une autre diamine (I), qui peut former des ions ammonium quaternaire stables vis-à-vis d'alcalis, et dans laquelle la monoquaternisation est favorisée par rapport à la bis-quaternisation par une nucléophilie différente d'au moins $\Delta pK_a > 1,0$.

**7.** Membrane bipolaire selon la revendication 6, caractérisée en ce que le DABCO, le 1,3-bis(diméthylamino-2,2-diméthylpropane) ou la diamine (I) est utilisé en quantité insuffisante, par rapport à l'agent d'alkylation polymère, de sorte qu'outre une monoquaternisation complète des diamines, il s'effectue également encore une bis-quaternisation partielle, et la couche sélective d'ions est munie de groupes

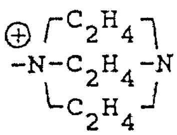 , ou 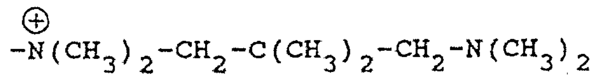

ou d'autres groupes ammonium quaternaire qui sont formés à partir de la diamine (I), et les chaînes polymères de la couche sélective d'anions sont reliées par des ponts

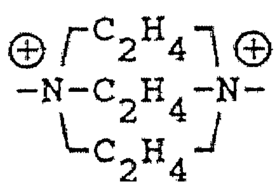 et/ou 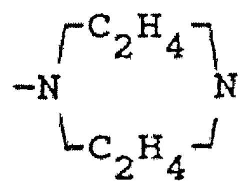 ,

ou bien

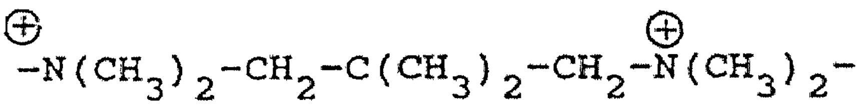

et/ou par des ponts $-NH-CH_2-C(CH_3)_2-CH_2-NH$, ou par d'autres ponts diamine formés à partir de la diamine (I).

**8.** Membrane bipolaire selon la revendication 5, caractérisée en ce que l'agent d'alkylation monomère est le bromure de néopentyle ou le 1,3-dibromo-2,2-diméthylpropane ou un autre composant α,ω-dihalogéné (II) qui permet la formation de groupes ammonium quaternaire, stables en présence d'alcalis, avec les groupes amino de l'amine polymère.

**9.** Membrane bipolaire selon la revendication 8, caractérisée en ce que le 1,3-dibromo-2,2-diméthylpropane ou l'autre composant α,ω-dihalogéné (II) est utilisé en quantité insuffisante, par rapport à l'amine polymère, de sorte que les chaînes polymères de la couche sélective d'anions sont reliées par des ponts diamine qui sont formés à partir des groupes amino de l'amine polymère et de l'agent d'alkylation bifonctionnel (II) .

**10.** Membrane bipolaire selon une ou plusieurs des revendications 1 à 9, caractérisée en ce que la solution de polymère L1 ou L2 pour la préparation de la couche sélective de cations est dans chaque cas une solution homogène d'un polymère sulfoné ou d'un mélange de polymères sulfonés, ou d'un mélange de polymères sulfonés et de polymères non sulfonés, et, en ce qui concerne les polymères sulfonés, il s'agit de polymères qui portent des groupes $-SO_3X$ dans lesquels X = H, $NH_2$ ou $M^{y+}$, M étant un élément des groupes principaux ou

secondaires 1 à 4, de préférence Na ou K, et différents radicaux X pouvant être présents dans une couche sélective de cations.

**11.** Membrane bipolaire selon une ou plusieurs des revendications 1 à 10,
caractérisée en ce que
la couche sélective de cations est réticulée de façon définie par addition à la solution homogène L1 ou L2, en fonction du degré de réticulation désiré, de quantités équimolaires de DCC (dicyclohexylcarbodiimide) et de 1,4-diaminobutane et de quantités catalytiques de diméthylaminopyridine, et des chaînes de polymère portant des groupes $-SO_3H$ sont reliées par des ponts 1,4-diaminobutane par élimination d'eau.

**12.** Membrane bipolaire selon une ou plusieurs des revendications 1 à 10,
caractérisée en ce que
la surface de la couche sélective de cations est modifiée par enduction avec une solution alcoolique à 0,5-10 %, de préférence à 5 %, de polymères perfluorés.

**13.** Membrane bipolaire selon une ou plusieurs des revendications 1 à 12,
caractérisée en ce que,
pour l'ajustement irréversible de la densité de réticulation, la membrane bipolaire est traitée pendant 1 jour par KOH 1 N.

**14.** Membrane bipolaire selon une ou plusieurs des revendications 1 à 13,
caractérisée en ce que,
pour le renforcement mécanique, elle contient un tissu de polymère dans la couche sélective d'anions ou dans la couche sélective de cations ou entre ces deux couches.

**15.** Procédé pour la fabrication des membranes bipolaires selon une ou plusieurs des revendications 1 à 14, par préparation, à partir de la phase liquide, d'une première couche sélective d'ions, et application sur celle-ci, à partir de la phase liquide, d'une seconde couche sélective d'ions, de charge opposée,
caractérisé en ce qu'
à partir d'une solution de polymère L1, on produit une couche sélective d'ions en étalant la solution L1 en une pellicule, pendant l'étalement, on expose la pellicule de polymère résultante à un gaz inerte ou mélange de gaz inertes, ayant une humidité relative de 95-100 %, contenant de la vapeur d'eau ou saturé de vapeur d'eau, on élimine le solvant et sur la face de la couche sélective d'ions résultante qui a été exposée au gaz ou mélange de gaz contenant de la vapeur d'eau, on produit à partir d'une solution de polymère L2 une seconde couche sélective d'ions, de charge opposée.

**16.** Procédé selon la revendication 15,
caractérisé en ce qu'
on utilise, en tant que gaz ou mélange de gaz contenant de la vapeur d'eau ou saturé de vapeur d'eau, de l'air contenant de la vapeur d'eau ou saturé de vapeur d'eau.

**17.** Procédé selon la revendication 15 ou 16,
caractérisé en ce qu'
avant l'élimination du solvant de la solution de polymère L1, on expose pendant 5 à 300 secondes la pellicule de polymère à une vapeur d'eau à 100°C.

**18.** Procédé selon une ou plusieurs des revendications 15 à 17,
caractérisé en ce qu'
avant l'élimination du solvant de la solution de polymère L1 et éventuellement après le traitement par de la vapeur d'eau à 100°C, on maintient la pellicule de polymère pendant 3 à 60 minutes à des températures comprises entre 25 et 85°C et à une humidité relative de l'air de 60 à 95 %.

**19.** Procédé selon une ou plusieurs des revendications 15 à 18,
caractérisé en ce qu'
en tant que solution de polymère L1 ou L2 pour la préparation de la couche sélective d'anions, on utilise dans chaque cas une solution homogène d'un agent d'alkylation polymère et d'une amine monomère, ou d'une amine polymère et d'un agent d'alkylation monomère, ou d'un agent d'alkylation polymère et d'une amine polymère.

EP 0 563 851 B1

**20.** Procédé selon la revendication 19,
caractérisé en ce qu'
en tant qu'amine monomère, on utilise le DABCO (1,4-diazabicyclo[2.2.2]octane), le 1,3-bis(diméthylamino-2,2-diméthylpropane) ou une autre diamine (I), qui peut former des ions ammonium quaternaire stables vis-à-vis d'alcalis, et dans lequel la monoquaternisation est favorisée par rapport à la bis-quaternisation par une nucléophilie différente d'au moins $\Delta pK_a > 1,0$.

**21.** Procédé selon la revendication 20,
caractérisé en ce qu'
on utilise le DABCO, le 1,3-bis(diméthylamino-2,2-diméthylpropane) ou la diamine (I) en quantité insuffisante, par rapport à l'agent d'alkylation polymère, de sorte qu'outre une monoquaternisation complète des diamines, il s'effectue également encore une bis-quaternisation partielle, et la couche sélective d'ions est munie de groupes

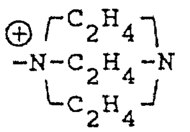

, ou $\overset{\oplus}{-N}(CH_3)_2-CH_2-C(CH_3)_2-CH_2-N(CH_3)_2$

ou d'autres groupes ammonium quaternaire qui sont formés à partir de la diamine (I), et les chaînes polymères de la couche sélective d'anions sont reliées par des ponts

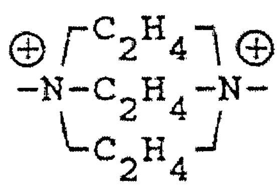

et/ou

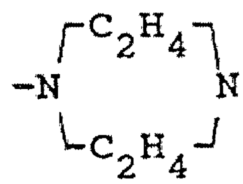

,

ou bien

$$\overset{\oplus}{-N}(CH_3)_2-CH_2-C(CH_3)_2-CH_2-\overset{\oplus}{N}(CH_3)_2-$$

et/ou par des ponts $-NH-CH_2-C(CH_3)_2-CH_2-NH$, ou par d'autres ponts diamine formés à partir de la diamine (I).

**22.** Procédé selon la revendication 19,
caractérisé en ce qu'
on utilise comme agent d'alkylation monomère le bromure de néopentyle ou le 1,3-dibromo-2,2-diméthylpropane ou un autre composant $\alpha,\omega$-dihalogéné (II) qui permet la formation de groupes ammonium quaternaire, stables en présence d'alcalis, avec les groupes amino de l'amine polymère.

**23.** Procédé selon la revendication 22,
caractérisé en ce qu'
on utilise le 1,3-dibromo-2,2-diméthylpropane ou l'autre composant $\alpha,\omega$-dihalogéné (II) en quantité insuffisante, par rapport à l'amine polymère, de sorte que les chaînes polymères de la couche sélective d'anions sont reliées par des ponts diamine qui sont formés à partir des groupes amino de l'amine polymère et de l'agent d'alkylation bifonctionnel (II) .

**24.** Procédé selon une ou plusieurs des revendications 15 à 23,
caractérisé en ce qu'
on utilise comme solution de polymère L1 ou L2 pour la préparation de la couche sélective de cations dans chaque cas une solution homogène d'un polymère sulfoné ou d'un mélange de polymères sulfonés, ou d'un mélange de polymères sulfonés et de polymères non sulfonés, et, en ce qui concerne les polymères sulfonés, il s'agit de polymères qui portent des groupes $-SO_3X$ dans lesquels X = H, $NH_2$ ou $M^{y+}$, M étant un élément des groupes

principaux ou secondaires 1 à 4, de préférence Na ou K, et différents radicaux X pouvant être présents dans une couche sélective de cations.

**25.** Procédé selon une ou plusieurs des revendications 15 à 24,
caractérisé en ce qu'
on soumet à une réticulation définie la couche sélective de cations en ajoutant à la solution homogène L1 ou L2, en fonction du degré de réticulation désiré, des quantités équimolaires de DCC (dicyclohexylcarbodiimide) et de 1,4-diaminobutane et des quantités catalytiques de diméthylaminopyridine, et des chaînes de polymère portant des groupes -$SO_3H$ sont reliées par des ponts 1,4-diaminobutane par élimination d'eau.

**26.** Procédé selon une ou plusieurs des revendications 15 à 25,
caractérisé en ce qu'
on modifie la surface de la couche sélective de cations par enduction avec une solution alcoolique à 0,5-10 %, de préférence à 5 %, de polymères perfluorés.

**27.** Procédé selon une ou plusieurs des revendications 15 à 26,
caractérisé en ce que
pour l'ajustement irréversible de la densité de réticulation, on traite la membrane bipolaire pendant 1 jour par KOH 1 N.

**28.** Procédé selon une ou plusieurs des revendications 15 à 27,
caractérisé en ce qu'
on introduit un tissu de polymère dans la couche sélective de cations ou dans la couche sélective d'anions ou entre ces deux couches.

**29.** Utilisation d'une membrane bipolaire selon une ou plusieurs des revendications 1 à 14,
dans l'électrodialyse.

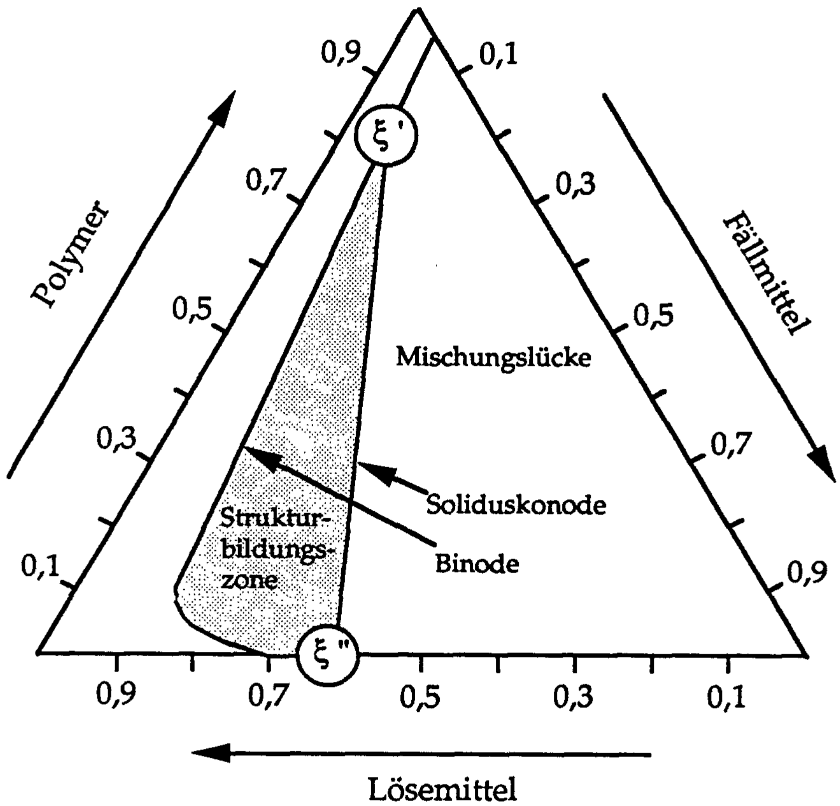
0,9
0,1
0,7
0,3
Polymer
Fällmittel
0,5
0,5
Mischungslücke
0,3
0,7
Soliduskonode
Struktur-
bildungs-
zone
Binode
0,1
0,9
0,9
0,7
0,5
0,3
0,1
Lösemittel

Figur 1

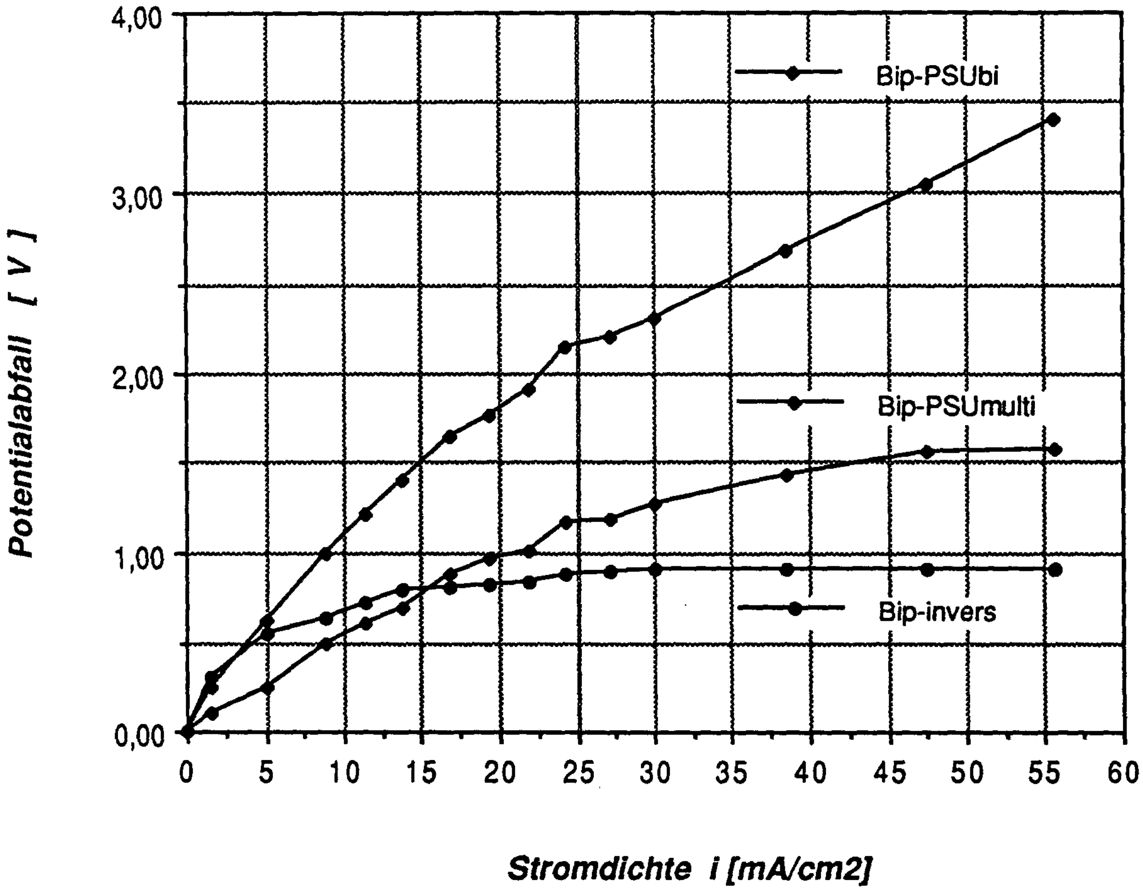
4,00
3,00
2,00
1,00
0,00
Potentialabfall [ V ]
0
5
10
15
20
25
30
35
40
45
50
55
60
Stromdichte i [mA/cm2]
Bip-PSUbi
Bip-PSUmulti
Bip-invers

Figur 2